# EUROPÄISCHE PATENTSCHRIFT

(11) **EP 0 865 450 B1**
(45) Veröffentlichungstag und Bekanntmachung des Hinweises auf die Patenterteilung: **18.08.1999**
(21) Anmeldenummer: 96941605.6
(22) Anmeldetag: 28.11.1996
(51) Int. Cl.: C08F 6/00

(54) **VERFAHREN ZUM ENTFERNEN VON RESTLÖSEMITTELN UND RESTMONOMEREN AUS PULVERFÖRMIGEN POLYMERISATEN**
PROCESS FOR THE REMOVAL OF RESIDUAL SOLVENTS AND RESIDUAL MONOMERS FROM POWDERED POLYMERISATES
PROCEDE POUR L'ELIMINATION DE SOLVANTS RESIDUELS ET DE MONOMERES RESIDUELS DANS DES POLYMERISATS PULVERULENTS

(30) Priorität: 04.12.1995 DE 19545100
(43) Veröffentlichungstag der Anmeldung: 23.09.1998
(73) Patentinhaber: BASF AKTIENGESELLSCHAFT, 67056 Ludwigshafen (DE)
(72) Erfinder: BREEDE, Knut, D-68163 Mannheim (DE); SCHADE, Christian, D-67061 Ludwigshafen (DE)
(86) Internationale Anmeldenummer: EP9605257
(87) Internationale Veröffentlichungsnummer: WO9720866

(56) Entgegenhaltungen:
- DE-A- 3 323 940
- US-A- 4 703 105
- US-A- 4 748 220

## Beschreibung

Die Erfindung betrifft ein Verfahren zum Entfernen von Restlösemitteln und Restmonomeren aus pulverförmigen Polymerisaten durch Extrahieren der Polymerisate mit flüssigem oder überkritischem Kohlendioxyd, Distickstoffmonoxyd, Propan und/oder Butan als Extraktionsmittel.

Pulverförmige, Carboxylgruppen enthaltende Polymerisate können nach verschiedenen Verfahren durch Polymerisieren von Carboxylgruppen tragenden Monomeren, gegebenenfalls zusammen mit anderen Monomeren, hergestellt werden, z.B. nach dem Verfahren der Fällungspolymerisation, der umgekehrten Suspensionspolymerisation oder in einem Pulverbett. In allen Fällen benötigt man ein Lösemittel. Bei der Herstellung von wasserlöslichen, pulverförmigen Polymerisaten setzt man beispielsweise als Lösemittel häufig aliphatische oder aromatische Kohlenwasserstoffe ein. Beim Polymerisieren in einem Festbett benötigt man inerte Flüssigkeiten als Siedehilfsmittel oder man setzt einen großen Überschuß eines leichtflüchtigen Monomeren ein, um die bei der Polymerisation entstehende Wärme abzuführen. Bei den oben angegebenen Verfahren erhält man pulverförmige Polymerisate, die restliche Mengen an eingesetzten Lösemitteln und an nicht polymerisierten Monomeren enthalten. Bevor solche Polymerisate in den Handel gebracht werden, müssen die anhaftenden Lösemittel und die restlichen Monomeren entfernt werden.

Aus der US-A-4293668 ist beispielsweise bekannt, pulverförmige Copolymerisate aus Olefinen und Maleinsäure mit azyklischen Alkanen mit 5 bis 8 Kohlenstoffatomen zu extrahieren. Hierbei werden restliche Monomere und niedrigmolekulare Copolymerisatanteile entfernt:

Aus der EP-B-0117411 ist ein Verfahren zum Entfernen von physiologisch bedenklichen Lösemitteln aus Carboxyl- oder Säureanhydridgruppen enthaltenen Polymerisaten bekannt. Bei diesem Verfahren behandelt man die Polymerisate mit aliphatischen C₅- bis C₁₈-Kohlenwasserstoffen bei einer Temperatur, die mindestens so hoch liegt, wie die untere Grenze des Erweichungsbereiches des Polymerisats.

Aus der US-A-3522228 und der EP-B-0220603 sind Verfahren zur Herstellung von pulverförmigen Polymerisaten bekannt, bei denen man ethylenisch ungesättigte Verbindungen in überkritischem Kohlendioxyd radikalisch polymerisiert. Die dabei anfallenden feinteiligen Polymerisate können ebenfalls störende Mengen an restlichen Monomeren enthalten.

Aus der WO-A-93/12161 ist ein Verfahren zur Reinigung von Elastomeren bekannt, wobei man die Elastomeren mit einer überkritischen Flüssigkeit behandelt, um Phthalsäureester und/oder mehrkernige aromatische Kohlenwasserstoffe daraus zu entfernen. Vorzugsweise werden Formteile aus Elastomeren mit überkritischem Kohlendioxyd behandelt.

Aus der WO-A-95/18834 ist ein Verfahren zur Extraktion, Fraktionierung und Trennung von Polymeren mit überkritischen Flüssigkeiten bekannt. Die Polymeren werden beispielsweise mit Tetrafluorethan und Heptafluorpropan im überkritischen Zustand behandelt. Nach dieser Behandlung kann gegebenenfalls eine weitere Behandlung mit überkritischem Kohlendioxyd erfolgen. Einer solchen Behandlung werden vorzugsweise Elastomere unterworfen, um daraus mehrkernige aromatische Kohlenwasserstoffe zu entfernen. Nach dem Verfahren können auch verschiedene Kunststoffe behandelt werden, um Restmonomere und anhaftende Lösemittel und andere störende Verunreinigungen zu entfernen.

Ein besonders hartnäckiges Problem ist die Entfernung von Restmonomeren, anhaftenden Lösemitteln oder anderen störenden Verunreinigungen aus Carboxylgruppen enthaltenden Polymerisaten, beispielsweise vernetzten Polyacrylsäuren. Die Entfernung von Benzol, eines gängigen Verdünnungsmittels bei der Synthese, ist z.B. so aufwendig, daß kosmetische und pharmazeutische Produkte heutzutage bevorzugt in einem anderen Verdünnungsmittel, beispielsweise in Mischungen aus Cyclohexan und Essigester, hergestellt werden. Aber auch diese Polymere enthalten noch bis zu 0,5 Gew.-% der Lösemittel neben größeren Mengen an Restmonomeren und weiteren Verunreinigungen wie Starterzerfallsprodukten.

Der Erfindung liegt daher die Aufgabe zugrunde, den Restmonomergehalt von pulverförmigen Carboxylgruppen enthaltenden Polymerisaten zu senken und restliche Lösemittel, die diesen Polymerisaten anhaften, nach Möglichkeit weitgehend zu entfernen.

Die Aufgabe wird erfindungegemäß gelöst mit einem Verfahren zum Entfernen von Restlösemitteln und Restmonomeren aus pulverförmigen Polymerisaten durch Extrahieren der Polymerisate mit überkritischem Kohlendioxyd als Extraktionsmittel. Das erfindungsgemäße Verfahren ist dadurch gekennzeichnet, daß man pulverförmige Carboxylgruppen enthaltende Polymerisate, die
I.
   (a) 85 bis 95,95 Gew.-% eines Carboxylgruppen tragenden Monomeren,
   (b) 0,05 bis 5 Gew.-% eines Vernetzers und
   (c) 0 bis 10 Gew.-% eines C₈- bis C₃₀-Alkylmethacrylats und
   (d) 0 bis 5 Gew.-% eines anderen wasserunlöslichen Comonomeren oder
II.
   (a) mindestens 40 Gew.-% Maleinsäureanhydrid,
   (b) 0,05 bis 5 Gew.-% eines Vernetzers und
   (c) 25 bis 49,95 Gew.-% mindestens eines C₁- bis C₃₀-Alkylvinylethers und/oder eines C₄- bis C₃₀-Alkens
einpolymerisiert enthalten, als Festbett oder Wirbelbett in einem Extraktor vorlegt und mit dem überkritischen Kohlendioxid in Kontakt bringt. Die pulverförmigen Polymerisate werden vorzugsweise durch radikalische Fällungspolymerisation der Monomeren in organischen Verdünnungsmitteln hergestellt.

Geeignete Monomere (a) sind beispielsweise monoethylenisch ungesättigte C₃- bis C₈-Carbonsäuren, ihre Anhydride oder Mischungen aus den genannten Carbonsäuren und Anhydriden. Beispiele für die Monomeren dieser Gruppe sind Acrylsäure, Methacrylsäure, Maleinsäure, Fumarsäure, Itaconsäure oder Crotonsäure. Als Anhydride kommen beispielsweise Methacrylsäureanhydrid, Itaconsäureanhydrid oder Maleinsäureanhydrid in Betracht. Bevorzugt eingesetzte Monomere dieser Gruppe sind Acrylsäure, Methacrylsäure, Crotonsäure, Maleinsäure, Maleinsäureanhydrid oder Mischungen dieser Monomeren.

Die Monomeren (a) können auch in Form ihrer Alkalimetall-, Erdalkalimetall- oder Ammoniumsalze vorliegen. Die zur Polymerisation eingesetzten Monomeren der Gruppe (a) können bis zu 85 Mol-%, vorzugsweise bis zu 40 Mol-% neutralisiert sein. Bevorzugte Basen für die Neutralisation sind Natronlauge, Kalilauge und Ammoniak.

Die Monomeren der Gruppe (b), die gegebenenfalls mit den Monomeren der Gruppe (a) copolymerisiert werden, sind Vernetzer. Hierbei handelt es sich um Monomeren mit mindestens 2 ethylenisch ungesättigten Doppelbindungen im Molekül.

Geeignete Vernetzer dieser Art sind zum Beispiel Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen. Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglycol, 3-Methylpentan-1,4-diol, 2,5-Dimethyl-1,3-hexandiol, 2,2,4-Trimethyl-1,3-pentandiol, 1,2-Cyclohexandiol, 1,3-Cyclohexandiol, 1,4-Bis(hydroxymethyl)cyclohexan, Hydroxypivalinsäure-neopentylglycolmonoester, 2,2-Bis(4-hydroxyphenyl)propan, 2,2-Bis[4-(hydroxypropyl)phenyl]propan, Diethylenglykol, Triethylenglykol, Tetraethylenglykol, Dipropylenglykol, Tripropylenglykol, Tetrapropylenglykol, 3-Thiopentan-1,5-diol sowie Polyethylenglykole, Polypropylenglykole und Polytetrahydrofurane mit Molekulargewichten von jeweils 200 bis 10000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Triethoxycyanursäure, Sorbitan, Zucker wie Saccharose, Glucose, Mannose. Selbstverständlich können die mehrwertigen Alkohole auch nach Umsetzung mit Ethylenoxid und/oder Propylenoxid als die entsprechenden Ethoxylate und/oder Propoxylate eingesetzt werden. Die mehrwertigen Alkohole können auch zunächst durch Umsetzung mit Epichlorhydrin in die entsprechenden Glycidether überführt werden.

Weitere geeignete Vernetzer sind die Vinylester von monoethylenisch ungesättigten Carbonsäuren oder die Ester einwertiger, ungesättigter Alkohole mit monoethylenisch ungesättigten C₃- bis C₆-carbonsäuren wie Acrylsäure, Methacrylsäure, Itaconsäure, Maleinsäure oder Fumarsäure. Beispiele für ungesättigte Alkohole sind Allylalkohol, 1-Buten-3-ol, 5-Hexan-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol.

Man kann aber auch die einwertigen, ungesättigten Alkohole mit mehrwertigen Carbonsäuren im Molverhältnis von mindestens 2:1 verestern. Beispiele für mehrwertige Carbonsäuren sind Malonsäure, Weinsäure, Trimellitsäure, Phthalsäure, Terephthalsäure, Citronensäure und Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, zimtsäure oder 10-Undecensäure.

Geeignet sind außerdem geradkettige oder verzweigte, lineare oder cyclische, aliphatische oder aromatische Kohlenwasserstoffe, die über mindestens zwei Doppelbindungen verfügen, z.B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20.000. Als Vernetzer sind ferner Bis-Acrylsäureamide und Bis-Methacrylsäureamide geeignet. Die zugrundeliegenden Anine enthalten mindestens zwei primäre oder sekundäre N-Atome, z.B. Diaminomethan, 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren wie Acrylsäure, Methacrylsäure, Itaconsäure, Maleinsäure oder mindestens zweiwertigen Carbonsäuren, die oben genannt sind.

Geeignet sind auch mindestens zwei Allylgruppen aufweisende Allylester, -amide, amine, -harnstoffe, -cyanurate oder -silane, beispielsweise Diallylphosphat, Triallylphosphat, N,N'-Diallylweinsäurediamid, Diallylamin, Triallylamin, N,N'-Diallyl-diaminoethan, N,N'-Diallylpiperazin, N,N'-Diallylethylenharnstoff, Triallyltriazintrion und Tetraallylsilan.

Geeignet sind auch mindestens zwei N-Vinyl-Gruppen aufweisende Derivate von Harnstoff, Amiden, Cyanuraten oder Urethanen, beispielsweise N,N'-Divinylharnstoff, N,N'-Divinylethylenharnstoff, N,N'-Divinylpropylenharnstoff oder N,N'-Divinylweinsäurediamid.

Weitere geeignete Vernetzer sind Divinyldioxan, Tetravinylsilan, Hexaallyltrimethylentrisulfon, Butadien oder Isopropen. Selbstverständlich können auch Mischungen der vorgenannten Verbindungen eingesetzt werden.

Bevorzugt eingesetzte Monomere (b) sind (Meth)acrylester von C₂-bis C₆-Diolen, Allylether von mehrwertigen Alkoholen, z.B. Trimethylolpropantriallylether, Penaterythrittriallylether, Pentaerythrittetraallylether und die Tri- oder Tetraallylether von Saccharose oder Sorbit, Methacrylsäureester von ungesättigten C₃- bis C₂₂-Alkandienen sowie Divinylglykol. Sofern Vernetzer zugegen sind, können sie in Mengen bis zu 10 Gew.-% eingesetzt werden.

Vorzugsweise verwendet man 0,005 - 5 Gew.-%, besonders bevorzugt 0,1 - 3 Gew.-% der Monomere (b).

Monomere der Gruppe (c) sind beispielsweise Acrylester oder Methacrylester von gesättigten, linearen oder verzweigten C₁- bis C₃₀-Alkoholen, Beispiele sind Methyl-, Ethyl-, n-Propyl-, 1-Propyl-, n-Butyl-, i-Butyl-, tert.-Butyl-, n-Hexyl-, n-Octyl-, n-Decyl-, n-Dodecyl-, n-Tetradecyl-, n-Hexadecyl-, n-Heptadecyl-, n-Octadecyl-, n-Nonadecyl-, n-Eisosadecyl-, n-Docosyl-, n-Tetracosyl-, 2-Ethyl-hexyl-, iso-Bornyl- oder Cyclohecylacrylat bzw. die entsprechenden Methacrylate. Weitere monoethylenisch ungesättigte Monomere (c) sind beispielsweise N-Vinylverbindungen wie N-Vinylpyrrolidon, N-Vinylimidazol, N-Vinylcaprolactam, 1-Vinyl-3-alkyl-imidazolium-Salze mit 8 - 30 C Atomen in der Alkylkette, Acrylamid, Methacrylamid, N-Mono- und Di(C₁ - C₁₈-Alkyl)acrylamide oder -methacrylamide wie N,N-Dimethylacrylamid, N-tert.-Butylacrylamid, N-tert.-Octylacrylamid, N-Dodecylacrylamid oder N-Methyl-undecylacrylamid, N-Vinylformamid, Vinylester von gesättigten C₁ - C₃₀-Carbonsäuren wie Vinylacetat, Vinylpropionat, Vinylneononaoat, Vinylneodecanoat oder Vinyllaurat, Hydroxyalkylenmono(meth)acrylester mit 2 bis 6 Kohlenstoffatomen in der Alkylengruppe, (Meth)Acrylester von mit 2 bis 50 Ethylenoxydeinheiten umgesetzten C₁- bis C₂₂-Alkoholen, Aminoalkyl(meth)acrylate und -(meth)acrylamide wie beispielsweise Dimethylaminoethylacrylat, Diethylaminoethylacrylat, Dimethylaminopropylacrylat, Diethylaminopropylacrylat, Butylaminoethylacrylat oder die entsprechenden Methacrylate und (Methlacrylamide, C₁- bis C₂₂-Alkylvinylether, geradkettig oder verzweigte, lineare oder cyclische C₄- bis C₃₀-Alkene mit endständiger Doppelbindung, Styrol, Acrylnitril, Methylvinylketon, Vinylchlorid, Vinylidenchlorid. Besonders bevorzugt werden Acrylamid, N-Vinylpyrrolidon, N-Vinylcaprolactam, Vinylacetat, Vinylpropionat, Vinylneodecanoat, Vinylmethylether, C₄- bis C₂₂-Alkene wie Isobuten, Diisobuten, 1-Octadecen, 1-Hexadecen oder 1-Dodecen, C₁-, C₂-, C₄- und(oder C₁₂- bis C₂₂-Alkylacrylate oder -methacrylate, N-(C₄- bis C₁₂-Alkylacrylamide, Butylaminoethylmethacrylat oder Hydroxy(C₂- bis C₄-alkylen)acrylate und -methacrylate. Selbstverständlich können auch Mischungen der genannten Monomere eingesetzt werden. Die Monomere (c) sind, sofern sie eingesetzt werden, in Mengen bis zu 95 Gew.-% zugegen. Werden C₁₂- bis C₂₂-Alkylmethacrylate eingesetzt, so sind sie vorzugsweise in Mengen bis zu 5 Gew.-% zugegen.

Die Polymere können weitere Additive enthalten, insbesondere Schutzkolloide oder Emulgatoren. Emulgatoren sind häufig nichtionische, niedermolekulare oder polymere, statistisch oder blockartig aufgebaute Verbindungen. Gelegentlich können solche Additive auch als Bestandteil des Polymers aufgefaßt werden, wie beispielsweise in der EP-A-0 584 771 und den dort zitierten Schriften beschrieben. Falls solche Additive zugegen sind, werden sie in Mengen von bis zu 20 Gew.-%, bevorzugt bis zu 10 Gew.-% eingesetzt.

Die beschriebenen Polymere können auch in Gegenwart von z. B. Zuckern, Polysacchariden, thermisch, oxidativ, hydrolytisch oder enzymatisch abgebauten Polysacchariden und/oder Proteinen hergestellt worden sein. Beispiele für Zucker und/oder Zuckerderivate sind Glucose, Saccharose, Mannose, Stärkehydrolysate, Stärke, Cellulose oder Cellulosesther. Der Anteil dieser Verbindungen im Vergleich zur Monomerenmischung (a) bis (c) kann bis zu 80 %, vorzugeweise bis zu 50% betragen.

Die Polymere liegen bevorzugt als feinteilige Pulver vor, wobei mindestens 10 Gew.-% der Teilchen des feinteiligen Polymerpulvers Teilchendurchmesser von unter 300 µm besitzen. Der mittlere Teilchendurchmesser der feinteiligen Polymerisate beträgt z.B. 0,5 bis 250, vorzugsweise 1 bis 200 µm.

Bevorzugte Zusammensetzungen von Polymeren, aus denen anhaftende restliche Lösemittel und Restmonomere erfindungsgemäß entfernt werden, sind beispielsweise die folgenden Copolymerisate, wobei sich die Angaben in Gew.-% auf die einpolymerisierten Monomeren beziehen:
- (1) 90 - 99,95 % Acrylsäure, Methacrylsäure und/oder Maleinsäure,
(2) 0,05 - 5 % Monomere (b)
(3) 0 - 10 % eines C₈- bis C₃₀-Alkylmethacrylats
(4) 0 - 5 % eines anderen wasserunlöslichen Comonomeren
oder
- (1) 50 - 65 % Maleinsäureanhydrid
(2) 0,05 - 5 % Monomere (b)
(3) 25 - 49,95 % mindestens eines C₁- bis C₃₀-Alkylvinylethers und/oder eines C₄- bis C₃₀-Alkens.

Bei einer Klasse der oben angegebenen Polymeren handelt es sich beispielsweise um vernetzte Polyacrylsäuren oder Polymaleinsäuren. Einige Vertreter dieser Gruppe werden auch als Carbomere oder Cross-Polyacrylate bezeichnet. Sie werden vorzugsweise als Verdicker, Gelbildner, Stabilisatoren oder polymere Emulgierhilfsmittel eingesetzt. Solche Produkte werden z.B. unter den Handelsnamen Carbopol®, Pemulen@, Synthalen®, Acrisint®, Stabylen®, Junlon®, Sanwet® oder Hivis® für kosmetische, pharmazeutische oder technische Formulierungen auf dem Markt angeboten. Eine andere Klasse solcher Carboxylgruppen tragender Polymere wird vorzugsweise in der Kosmetik, z. B. als Haarsprayharz, eingesetzt. Solche Produkte werden beispielsweise unter den Handelsnamen Luvimer®, Ultrahold®, Luviset®, Amphomer®, Lovocryl®, National®, Dermacryl® oder Carboset® vertrieben. Es sind aber auch andersartig aufgebaute Polymere im vorliegenden Verfahren einsetzbar.

Nach einem anderen bevorzugten Herstellverfahren erfolgt die radikalische Polymerisation der Monomeren in überkritischem Kohlendioxyd. Solche Verfahren sind aus der zum Stand der Technik genannten US-A-3 522 228 und der EP-B-0 220 603 und der US-A-4748220 bekannt. Die in überkritischem Kohlendioxyd hergestellten Polymerisate und die nach Verfahren der Fällungspolymerisation erhaltenen Polymerisate weisen in vielen Fällen Verunreinigungen auf, die aus den Polymeren abgetrennt werden müssen. Bei den Verunreinigungen kann es sich um niedrig molekulare Verbindungen wie Zerfallsprodukte von Radikalbildnern, Nebenprodukte der Polymerisation, festanhaftende Lösemittel oder restliche Monomere handeln. Die vorstehend genannten Stoffe, insbesondere Restlösemittel und Restmonomere, werden erfindungsgemäß entfernt bzw. gelingt es erfindungsgemäß, den Gehalt der Polymerisate an diesen Stoffen entscheidend zu verringern.

Die Extraktion wird erfindungsgemäß in überkritischem Kohlendioxyd bei Temperaturen im Extraktor von etwa 31 bis 150, vorzugsweise 35 bis 120°C und besonders bevorzugt bei 40 bis 100°C und Drücken im Extraktor oberhalb von 73 bar, vorzugsweise zwischen 74 und 300 bar durchgeführt. Um ein pulverförmiges Carboxylgruppen enthaltendes Polymerisat erfindungsgemäß zu behandeln, wird das Polymerisat als Festbett oder Wirbelbett in einem Extraktor vorgelegt. Druck und Temperatur im Extraktor werden vorzugsweise so gewählt, daß die Löslichkeiten der Stoffe, die aus den Polymerisaten entfernt werden sollen, im Extraktionsmittel hoch sind. Druck und Temperatur im Extraktor bestimmen außerdem die Diffusionsgeschwindigkeiten. Auch sie sollen hoch sein. Der Extraktor kann kontinuierlich oder diskontinuierlich betrieben werden. Man behandelt das Carboxylgruppen enthaltene Polymerisat mit überkritischem Kohlendioxyd. Das Extraktionsmittel nimmt die aus dem Polymerisat zu entfernenden Verunreinigungen auf und wird nach Durchströmen des Reaktors einer Behandlung unterworfen, bei der sich die Löslichkeiten der Verunreinigungen im Extraktionsmittel erniedrigen. Dies geschieht am einfachsten durch Änderung von Temperatur und Druck. Die Verunreinigungen fallen dabei aus dem Extraktionsmittel aus und können in einem Separator aufgefangen werden. Das Extraktionsmittel wird nach Abtrennung der Verunreinigungen in den Prozeß zurückgeführt. Bei der Behandlung von Polymerisaten im Extraktor können Drücke und Temperaturen stufenweise so variiert werden, daß aufgrund verschiedener Löslichkeiten, die die Verunreinigungen in dem jeweils angewendeten Extraktionsmittel haben, voneinander getrennt extrahiert und im Separator getrennt isoliert werden können. Das Extraktionsmittel wird anschließend, wie bereits oben erwähnt, durch Druckerhöhung und/oder Temperaturerniedrigung wieder auf die im Extraktor herrschenden Bedingungen gebracht und in den Extraktor gefordert.

Die Extraktion kann ansatzweise durchgeführt werden, d.h., man führt zunächst die gesamte zu extrahierende Menge an Carboxyl-Gruppen enthaltendem Polymerisat in den Extraktor, preßt dann unter erhöhtem Druck, z.B. bei Drücken von 100 bis 150 bar und einer Temperatur oberhalb von 31°C, z.B. in dem Temperaturbereich von 35 - 50°C, Kohlendioxyd auf. Nach einer ausreichenden Einwirkungszeit wird das überkritische Kohlendioxyd, das Verunreinigungen aus dem Carboxylgruppen enthaltenden Polymerisat enthält, abgezogen und gegebenenfalls nach einem Abtrennen der Verunreinigungen in den Prozeß zurückgeführt.

Die Extraktion kann aber auch kontinuierlich oder quasikontinuierlich durchgeführt werden. Dabei wird dem Extraktor kontinuierlich oder in mehreren Teilportionen über geeignete Schleusen Polymerisat zugefügt und entnommen. Das Extraktionsmittel wird in diesem Fall vorzugsweise im Gegenstrom mit dem zu reinigenden Carboxylgruppen enthaltenden Polymerisat in Kontakt gebracht. Der Separator kann kontinuierlich, quasikontinuierlich oder nach Extraktionsende vollständig entleert werden.

Die Prozentangaben in den Beispielen bedeuten Gew.-%.

### Beispiel 1

In einem 240 ml fassenden Autoklaven werden 5 g eines vernetzten Copolymerisates aus 97 % Acrylsäure und 3 % Stearylmethacrylat mit einem mittleren Teilchendurchmesser von 22 µm vorgelegt. Das Copolymerisat hat einen Restmonomergehalt von 0,3 % Acrylsäure und enthält 1,3 % Cyclohexan. Der Autoklav wird nach dem Verschließen auf eine Temperatur von 35°C aufgeheizt. Danach presst man so lange Kohlendioxyd auf, bis der Druck 140 bar beträgt. Unter den angegebenen Extraktionsbedingungen von 35°C und 140 bar liegt das Kohlendioxyd im überkritischen Zustand vor und der Autoklav wird stündlich entspannt und mit frischem Kohlendioxyd befüllt. Nach einer Fraktionszeit von 3 Stunden entspannt man den Autoklav, entnimmt das Polymerisat und analysiert es. Der Restmonomergehalt an Acrylsäure beträgt 0,1 %. Das Polymerisat enthält 0,37 % Cyclohexan. Nach einer Extraktionszeit von 6 Stunden enthielt das Polymerisat 0,04 % nicht polymerisierte Acrylsäure und 0,35 % Cyclohexan.

### Beispiel 2

In einem 1 1 fassenden Extraktor einer Fluidextraktionsapparatur (Polyvalente CO₂-Hochdruckanlage Flex II der Fa. Sitec Engineering AG) werden 20 g einer vernetzten Polyacrylsäure (Gehalt an einpolymerisierter Acrylsäure betrug 99,1 %) mit einem mittleren Teilchendurchmesser von 15 bis 25 µm vorgelegt. Das feinteilige Polymerisat hatte einen Restmonomergehalt von 0,9 % Acrylsäure und enthielt 1 % Cyclohexan. Das Polymerisat wurde im Extraktor auf eine Temperatur von 35°C erwärmt und bei einem Druck von 250 bar mit 8,5 kg Kohlendioxyd/Stunde durchströmt. Nach einer Extraktionszeit von 3 Stunden betrug der Gehalt an restlicher Acrylsäure im Copolymerisat 0,1 % und der Cyclohexangehalt 0,5 %. Nach einer Extraktionszeit von 6 Stunden betrug der Restgehalt an nicht polymerisierter Acrylsäure 0,05 %. Das Copolymerisat enthielt 0,34 % Cyclohexan.

## Patentansprüche

1. Verfahren zum Entfernen von Restlösemitteln und Restmonomeren aus pulverförmigen Polymerisaten durch Extrahieren der Polymerisate mit überkritischem Kohlendioxid als Extraktionsmittel, dadurch gekennzeichnet, daß man pulverförmige Carboxylgruppen enthaltende Polymerisate, die
I.
(a) 85 bis 99,95 Gew.-% eines Carboxylgruppen tragenden Monomeren,
(b) 0,05 bis 5 Gew.-% eines Vernetzers und
(c) 0 bis 10 Gew.-% eines C₈- bis C₃₀-Alkylmethacrylats und
(d) 0 bis 5 Gew.-% eines anderen wasserunlöslichen Comonomeren oder
II.
(a) mindestens 40 Gew.-% Maleinsäureanhydrid,
(b) 0,05 bis 5 Gew.-% eines Vernetzers und
(c) 25 bis 49,95 Gew.-% mindestens eines C₁- bis C₃₀-Alkylvinylethers und/oder eines C₄- bis C₃₀-Alkens
einpolymerisiert enthalten, als Festbett oder Wirbelbett in einem Extraktor vorlegt und mit dem überkritischen Kohlendioxid in Kontakt bringt.

2. Verfahren nach Anspruch 1, dadurch gekennzeichnet, daß die Carboxylgruppen tragenden Polymerisate durch radikalische Fällungspolymerisation der Monomeren in organischen Verdünnungsmitteln hergestellt worden sind.

3. Verfahren nach Anspruch 1, dadurch gekennzeichnet, daß die Polymerisate durch radikalische Polymerisation der Monomeren in überkritischem Kohlendioxid hergestellt worden sind.

## Claims

1. A process for removing residual solvents and residual monomers from pulverulent polymers by extracting the polymers using supercritical carbon dioxide as extractant, which comprises introducing pulverulent polymers which contain carboxyl groups and which contain, in copolymerized form,
I
(a) 85 to 99.95% by weight of a carboxyl-carrying monomer,
(b) 0.05 to 5% by weight of a crosslinker and
(c) 0 to 10% by weight of a C₈- to C₃₀-alkyl methacrylate and
(d) 0 to 5% by weight of another water-insoluble comonomer or
II
(a) at least 40% by weight of maleic anhydride,
(b) 0.05 to 5% by weight of a crosslinker and
(c) 25 to 49.95% by weight of at least one C₁- to C₃₀-alkyl vinyl ether and/or a C₄- to C₃₀-alkene
into an extractor as solid bed or fluidized bed, and bringing them into contact with supercritical carbon dioxide.

2. A process as claimed in claim 1, wherein the carboxyl-carrying polymers have been prepared by free-radical precipitation polymerization of the monomers in organic diluents.

3. A process as claimed in claim 1, wherein the polymers have been prepared by free-radical polymerization of the monomers in supercritical carbon dioxide.

## Revendications

1. Procédé pour éliminer les résidus de solvants et de monomères contenus dans des polymères pulvérulents par extraction de ces polymères à l'aide du dioxyde de carbone à l'état surcritique servant d'agent d'extraction, caractérisé par le fait que l'on introduit les polymères pulvérulents portant des groupes carboxyle, qui contiennent à l'état polymérisé
I.
(a) 85 à 99,95 % en poids d'un monomère portant des groupes carboxyle,
(b) 0,05 à 5 % en poids d'un agent réticulant et
(c) 0 à 10 % en poids d'un méthacrylate d'alkyle en C8-C30 et
(d) 0 à 5 % en poids d'un autre comonomère insoluble dans l'eau, ou bien
II.
(a) au moins 40 % en poids d'anhydride maléique,
(b) 0,05 à 5 % en poids d'un agent réticulant et
(c) 25 à 49,95 % en poids d'au moins un éther alkylvinylique en C1-C30 et/ou d'un alcène en C4-C30,
à l'état de lit fixe ou de lit tourbillonnaire dans un extracteur et on les met en contact avec le dioxyde de carbone à l'état surcritique.

2. Procédé selon la revendication 1, caractérisé par le fait que les polymères portant des groupes carboxyle ont été préparés par polymérisation radicalaire des monomères avec précipitation dans des diluants organiques.

3. Procédé selon la revendication 1, caractérisé par le fait que les polymères ont été préparés par polymérisation radicalaire des monomères dans le dioxyde de carbone à l'état surcritique.
